(19)

**Europäisches Patentamt**
**European Patent Office**
**Office européen des brevets**

(11) **EP 4 722 979 A1**

(12) **EUROPEAN PATENT APPLICATION**

(43) Date of publication:
**08.04.2026 Bulletin 2026/15**

(21) Application number: **25206320.1**

(22) Date of filing: **02.10.2025**

(51) International Patent Classification (IPC):
**G06N 3/045** (2023.01)    **G06N 3/0495** (2023.01)
**G06N 3/0499** (2023.01)    **G06N 3/0985** (2023.01)
**G06N 3/08** (2023.01)

(52) Cooperative Patent Classification (CPC):
**G06N 3/045; G06N 3/0495; G06N 3/0499;
G06N 3/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **02.10.2024 IN 202441074507**

(71) Applicant: **GOOGLE LLC
Mountain View CA 94043 (US)**

(72) Inventors:
- **CULLER, David Ethan
  Mountain View, 94043 (US)**
- **JAIN, Prateek
  560016 Bangalore (IN)**
- **JIA, Zhipeng
  Mountain View, 94043 (US)**
- **KUMAR, Sanjiv
  Mountain View, 94043 (US)**
- **WILLCOCK, Jeremiah
  Mountain View, 94043 (US)**
- **YOU, Chong
  Mountain View, 94043 (US)**
- **PATHAK, Shreya
  London, N1C 4AG (GB)**
- **CHEN, Lin
  Mountain View, 94043 (US)**
- **YU, Xinnan
  Mountain View, 94043 (US)**
- **BHOJANAPALLI, Venkata Sesha Pavana Srinadh
  Mountain View, 94043 (US)**
- **SUBRAMANIAN, Suvinay
  Mountain View, 94043 (US)**
- **CHERN, Felix Ren-Chyan
  Mountain View, 94043 (US)**
- **ANDREEV, Alek Alexandrov
  London, N1C 4AG (GB)**
- **NETRAPALLI, Praneeth Kumar
  560016 Bangalore (IN)**
- **WU, Kan
  Mountain View, 94043 (US)**
- **LEVY, Henry Marc
  Mountain View, 94043 (US)**

(74) Representative: **Varley, James Richard et al
Venner Shipley LLP
200 Aldersgate
London EC1A 4HD (GB)**

(54) **INCREASING SPARSITY TO IMPROVE NEURAL NETWORK EFFICIENCY**

(57)    Methods, systems, and apparatus, including computer programs encoded on computer-storage media, for increasing sparsity to improve neural network efficiency. In some implementations, a system stores parameter values of parameter matrices of one or more layers of a neural network. The parameter values of the parameter matrices include (i) weight values of the one or more layers of the neural network, and (ii) predictor values that have been trained to predict levels of importance of items processed by the neural network. The system generates an output, including: determining a value for each of multiple items using the predictor values, selecting a proper subset of the items based on the values in the vector based on a threshold, and generating output of the one or more layers limiting computation based on the selected proper subset.

FIG. 1

EP 4 722 979 A1

**Description**

CROSS-REFERENCE TO RELATED APPLICATIONS

This application claims the benefit of priority under 35 U.S.C. 119(a) to Application No. 202441074507 filed in India on October 2, 2024, the entire contents of which is incorporated herein by reference.

BACKGROUND

This specification relates processing sequences of data efficiently using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

SUMMARY

This specification describes a system implemented as computer programs on one or more computers in one or more locations that can increase the speed and efficiency of processing by machine learning models. As a particular example, the system can perform highly accurate processing of neural networks, such as large language models (LLMs), in a highly computationally efficient manner.

The system can improve the efficiency of processing sequences of input with neural networks by greatly reducing the number of computational operations performed for a neural network layer. The system can allocate and train a portion of the parameters for a neural network to serve as a predictor of the most important entries in a set. For example, some dimensions (e.g., rows, columns, etc.) of the weight matrix for a neural network layer can be assigned to be trained and used as the predictor, so the predictor is embedded in and part of the weight matrix for one or more neural network layers. Then, using the predictor, the system can efficiently predict, for each input vector to the layer, a subset of entries that are most important to the layer's output for that input vector. The actual processing of the layer can be limited to the predicted subset of entries, which can greatly reduce the number of operations that need to be performed. In some cases, the technique involves using the predictor to select a subset of the parameter values (e.g., weight values for nodes), and performing a sparse matrix multiplication using the subset, which requires far fewer operations than performing a full matrix multiplication using the full set of parameter values for the layer. In other cases, the technique involves using a predictor to select a subset of entries in a context for the neural network, so attention can be computed for only the entries in the subset, which requires far fewer operations than performing attention calculations for all of the entries in the subset.

In effect, using the technique allows a neural network layer to include a prediction mechanism that can accurately narrow the scope of processing that needs to be done by the layer each time output of the layer is computed. The parameter values of the predictor are trained jointly with the rest of the neural network. The appropriate subset of entries (e.g., parameter values, context entries, etc.) is data-dependent, in that the subset of entries that is most influential varies from one input to the next and for different contexts or context states. Training parameters of the layer to serve as a predictor for the layer enables the system to make efficient and accurate predictions without increasing the size of the model or increasing the number of parameters to be trained, while still having the accuracy and versatility to predict the most influential entries for many different inputs.

As an example, for a feedforward network layer, a set of parameters can be allocated and trained to predict which input values of an input vector to the layer or which weight values for the layer will be most important (e.g., most influential or highest magnitude of activation). This can involve predicting which input vector coordinates and/or which parameters will result in non-zero activation values in an activation map when the activations of the layer are calculated. With the prediction of the most important subset, the processing of the layer can be limited to only using the parameter values corresponding to the subset. A sparse matrix multiplication performed with this technique requires significantly fewer operations than a full matrix multiplication. Consequently, the technique can reduce computational requirements, reduce latency of processing, reduce latency for transferring parameters in the memory subsystem (e.g., fewer weight values need to be transferred from system memory or cache into an accelerator chip or other processor), and reduce power consumption.

As another example, for an attention layer, parameters can be allocated and trained to predict which entries in a context will be most important (e.g., most influential or result in the highest attention scores). The context can include a set of embeddings or vectors representing input tokens in a series of inputs to the neural network. Using the predictor for the attention layer (e.g., trained with the attention layer), the system can generate output of the layer by predicting the subset of context entries that are most important, and then limiting the full attention calculation to only the subset of context entries predicted to be most important. By greatly reducing the amount of entries for which attention scores need to be calculated, this technique can reduce computational requirements, reduce latency of processing, reduce latency for transferring parameters in the memory subsystem (e.g., fewer context entries need to be transferred from system memory or cache into an accelerator chip or other processor), and reduce power consumption.

The system can use approximate thresholding techniques to select a subset of items that is approximately the highest-ranking or highest-importance subset (e.g., values that have the greatest magnitude or highest values). The system can use a statistical top-k technique, discussed below, which involves (i) computing a threshold such that approximately k entries exceed the threshold, and (ii) applying a soft-thresholding operator with this threshold to obtain a sparse output. The threshold can include approximately the k highest-ranking elements, and the amount of entries selected may include more or fewer than k entries, and may vary from one use of a layer to the next. For feedforward networks, the selected subset can be a subset of the weights of a neural network layer, and performing processing for only the selected subset can greatly reduce the amount of computation required. For attention layers, the selected subset can be a subset of the items in an attention cache, such as a key-value or KV cache, and performing attention processing for only the subset of items also greatly reduces the amount of computation required.

The techniques discussed herein can be used to improve the speed and efficiency of processing neural networks using accelerator chips or other processors (e.g., graphics processing units (GPUs), tensor processing units (TPUs), central processing units (CPUs), and other devices that perform matrix operations or other processing for machine learning models).

In one general aspect, a method performed by one or more computers includes: storing, by the one or more computers, parameter values of parameter matrices of one or more layers of a neural network, wherein the parameter values of the parameter matrices comprise (i) weight values of the one or more layers of the neural network, and (ii) predictor values that have been trained to predict levels of importance of items processed by the neural network, wherein the weight values and the predictor values are trained jointly during training of the neural network; and generating, by the one or more computers, an output of the neural network based on an input token for the neural network, wherein generating the output of the neural network comprises generating an output of the one or more layers, and wherein generating the output of the one or more layers comprises: determining, by the one or more computers, a value for each of multiple items using the predictor values, wherein determining the values comprises generating a vector of values by computing a multiplication involving a predictor matrix comprising the predictor values and a query vector that is based on an input to the one or more layers; selecting, by the one or more computers, a proper subset of the items based on the values in the vector, wherein selecting the proper subset comprises (i) determining a threshold level based on a calculation using the values and (ii) applying a soft thresholding operator based on the determined threshold to obtain a sparse vector representing the selected subset of the items; and generating, by the one or more computers, output of the one or more layers including by limiting computation based on the selected proper subset using the sparse vector.

In some implementations, the one or more parameter matrices are trained such that multiplying at least one parameter matrix for a layer with an input vector for the layer and the predictor matrix provides a low-rank predictor of locations of the most important items.

In some implementations, determining the threshold level comprises applying a quantile function of a standard Gaussian distribution of the values.

In some implementations, applying the soft thresholding operator based on the determined threshold comprises: reducing each of the values in the vector by the determined threshold; and after reducing the values, setting negative values to a predetermined value.

In some implementations, the one or more layers comprise a feedforward network that includes a first layer and a second layer; the sparse output vector is an output of the first layer of the feedforward network; and computing the output of the one or more layers comprises performing processing for the second layer of the feedforward network by limiting computation for the second layer to non-zero values of the sparse vector.

In some implementations, the one or more layers comprise a feedforward network that includes a first layer and a second layer; determining the value for each of multiple items using the predictor values comprises generating the vector of values by computing a multiplication of a parameter matrix of a first layer of the feedforward network, a predictor matrix comprising the predictor values corresponding to the feedforward network, and a query vector representing input to the feedforward network; and generating, by the one or more computers, output of the one or more layers including by: applying an activation function to the sparse vector to generate an activation map; and limiting computation for the first layer of the feedforward network and the second layer of the feedforward network to partial computation by performing sparse matrix multiplication using the activation map.

In some implementations, the one or more layers are part of an attention mechanism of the neural network; selecting the proper subset comprises selecting a proper subset of entries in a context for the neural network; and generating the output of the one or more layers comprises computing the output of the attention mechanism for only the entries in the context indicated by the proper subset of parameters.

In some implementations, the entries in the context comprise vectors that are embeddings or representations corresponding to input tokens in a sequence of input tokens for the neural network or to output tokens in a sequence of output tokens for the neural network.

In some implementations, selecting the proper subset of entries in the context for the neural network comprises selecting, based on the values, a portion of the number of entries in the context that are predicted to result in the highest attention scores.

In some implementations, the one or more layers are part of an attention mechanism of the neural network; determining the value for each of multiple items using the predictor values comprises generating the vector of values by computing a multiplication of a matrix of key vectors from a key-value cache, a predictor matrix comprising the predictor values corresponding to the attention mechanism, and a query vector based on an input vector for the attention mechanism; and generating, by the one or more computers, output of the one or more layers including by: applying a nonlinearity to the sparse vector to generate a result; and limiting computation for the attention mechanism by limiting attention processing to entries in the key-value cache corresponding to non-zero values in the result.

In some implementations, the nonlinearity is a softmax function.

In some implementations, the method comprises controlling computational cost of generating the output of the one or more layers using the value of a hyperparameter.

In some implementations, the value of the hyperparameter sets a level of sparsity to achieve through the selection, to adjust computation cost of calculating activations at one or more layers of the neural network.

In some implementations, the method comprises controlling computational cost of determining the vector of values using the value of a hyperparameter.

In some implementations, the value of the hyperparameter sets a rank of the predictor matrix.

In some implementations, the multiple items are key-value pairs representing context entries for the neural network or activations in the neural network.

In some implementations, the predictor values are trained to predict levels of importance of key-value pairs; and determining the importance score for each of the multiple key-value pairs comprises performing a matrix multiplication that is based on a key matrix and an input vector and does not use the value matrix, wherein the matrix multiplication generates the importance scores for the key-value pairs.

In another general aspect, a method performed by one or more computers includes: storing parameter values of a layer of a neural network, wherein the parameter values of the layer include parameter values of a query matrix and a key matrix, wherein the parameter values in a portion of the query matrix or in a portion of the key matrix have been trained to predict levels of importance of key-value pairs; and generating an output of the neural network based on an input token for the neural network, wherein generating the output of the neural network comprises generating an output of the layer, and wherein generating the output of the layer comprises: determining an importance score for each of multiple key-value pairs using the query matrix or the key matrix; selecting a proper subset of the key-value pairs based on the importance scores; and computing output of the layer while limiting computation based on the selected proper subset.

In some implementations, the layer is a feedforward layer; selecting the proper subset comprises selecting a proper subset of parameters of the feedforward layer; and computing the output of the layer while limiting computation based on the proper subset comprises computing the output of the layer using only the parameter values of the layer indicated by the proper subset of parameters.

In some implementations, the key matrix or the query matrix is configured to be multiplied by an input vector for the layer to provide a low-rank predictor of the location of the nonzero entries.

In some implementations, the portion of the key matrix is trained to predict levels of importance of key-value pairs; determining the importance score for each of the multiple key-value pairs comprises performing a matrix multiplication that uses the key matrix and an input vector for the layer and does not use the query matrix, wherein the matrix multiplication generates the importance scores for the key-value pairs; and computing the output of the layer while limiting computation based on the proper subset comprises performing a sparse matrix multiplication limited to parameter values of the layer corresponding to the proper subset of parameters.

In some implementations, the key-value pairs are entries in a lookup table that represent weight values of the layer.

In some implementations, the method includes controlling computational cost of the processing of the layer using the value of a hyperparameter.

In some implementations, selecting the proper subset of the key-value pairs based on the importance scores comprises selecting approximately a highest-ranking portion of the key-value pairs.

In some implementations, selecting the proper subset of the key-value pairs based on the importance scores comprises selecting a predetermined number of the key-value pairs by: determining a threshold for a vector such that approximately the predetermined number entries exceed the threshold; and applying a soft-thresholding operator with the determined threshold to a vector to obtain a sparse output.

In some implementations, selecting the proper subset of the key-value pairs based on the importance scores comprises selecting the proper subset by applying thresholding using a nearest neighbor search algorithm.

In some implementations, selecting the proper subset of the key-value pairs based on the importance scores comprises selecting the proper subset by applying thresholding that involves fitting a Gaussian distribution to activation entries and estimating a threshold that yields approximately a highest-magnitude set of entries using a Gaussian quantile function.

In some implementations, fitting the Gaussian distribution comprises computing a mean and standard deviation of one or more activation maps.

In some implementations, computing the output of the layer while limiting computation based on the selected proper subset comprises computing the output of the layer using the parameter values of the layer indicated by the proper subset of parameters and setting other parameter values to zero.

In some implementations, the layer is an attention layer; wherein selecting the proper subset comprises selecting a proper subset of entries in a context for the neural network; and wherein computing the output of the layer while limiting computation based on the proper subset comprises computing the output of the attention layer for only the entries in the context indicated by the proper subset of parameters.

In some implementations, the entries in the context comprise vectors that are embeddings or representations corresponding to input tokens in a sequence of input tokens for the neural network.

In some implementations, selecting the proper subset of entries in the context for the neural network comprises selecting, based on the importance scores, a predetermined number of entries in the context that are predicted to result in the highest attention scores; and computing the output of the layer while limiting computation based on the proper subset comprises computing the output of the attention layer for only the predetermined number of entries in the context indicated by the proper subset of parameters.

In some implementations, the key matrix or the query matrix is configured to be multiplied by an input vector for the attention layer to provide a low-rank predictor of the location of the nonzero attention scores for entries in the context.

In some implementations, the portion of the key matrix is trained to predict levels of importance of entries in the context; and wherein determining the importance score for each of the multiple key-value pairs comprises performing a matrix multiplication that uses the key matrix and an input vector for the layer and does not use the query matrix, wherein the matrix multiplication generates the importance scores for the entries in the context.

In some implementations, the method includes controlling computational cost of the processing of the attention layer using the value of a hyperparameter.

In some implementations, selecting the proper subset of the entries in the context is based on the importance scores comprises selecting approximately a highest-ranking portion of the entries in the context.

In some implementations, selecting the proper subset of the entries in the context based on the importance scores comprises selecting a predetermined number of the entries in the context by: determining a threshold such that approximately the predetermined number entries exceed the threshold; and applying a soft-thresholding operator with the determined threshold to select the proper subset.

In some implementations, selecting the proper subset of the entries in the context based on the importance scores comprises selecting the proper subset by applying thresholding using a nearest neighbor search algorithm.

In some implementations, selecting the proper subset of the entries in the context based on the importance scores comprises selecting the proper subset by applying thresholding that involves fitting a Gaussian distribution and estimating a threshold that yields approximately a highest-magnitude set of entries using a Gaussian quantile function.

In some implementations, computing the output of the layer while limiting computation based on the selected proper subset comprises computing the output of the layer using the parameter values of the layer indicated by the proper subset of parameters and setting other parameter values to negative infinity so that such entries become zero after passing through a softmax function.

In some implementations, determining the importance scores comprises applying a softplus nonlinearity.

In some implementations, generating the output of the neural network is performed by one or more processor having on-chip memory and associated off-chip memory; and the method includes, based on the selected subset, selectively loading entries from the context from the off-chip memory into the on-chip memory for processing by the attention layer, such that the entries loaded for processing by the attention layer are limited to the entries indicated by the selected subset.

In some implementations, generating the output of the neural network is performed by one or more central processing units.

In some implementations, generating the output of the neural network is performed by one or more accelerators having on-chip memory and associated off-chip memory.

In some implementations, the one or more accelerators comprise one or more graphics processing units or tensor processing units.

In some implementations, generating the output of the neural network is performed by one or more processor having on-chip memory and associated off-chip memory: based on the selected subset, selectively loading parameter values of the layer from the off-chip memory into the on-chip memory for processing to compute the output of the layer.

In another general aspect, a method performed by one or more computers includes: creating a neural network comprising multiple layers of nodes; representing parameters of a layer of the neural network using a query vector and a key vector; allocating a portion of the query vector or the key vector as a predictor to produce importance scores indicative of levels of importance of key-value pairs; and training the neural network, including training parameter values in the portion allocated as a predictor jointly with the other parameters of the neural network model.

In some implementations, the layer is a feedforward layer; and allocating of the portion of the query vector or the key vector to produce an importance scores indicative of levels of importance of key-value pairs comprises allocating the portion to predict of the location of the nonzero entries in an activation map corresponding to parameters of the feedforward layer.

In some implementations, the layer is an attention layer; and allocating of the portion of the query vector or the key vector to produce an importance scores indicative of levels of importance of key-value pairs comprises allocating the portion to predict of the location of entries in the context having the highest attention scores.

In some implementations, training the neural network includes training the neural network to generate an output of the neural network or an output of the layer.

Other embodiments of these and other aspects described herein include corresponding systems, apparatus, and computer programs, configured to perform the actions of the methods, encoded on computer storage devices. A system of one or more computers can be so configured by virtue of software, firmware, hardware, or a combination of them installed on the system that in operation cause the system to perform the actions. One or more computer programs can be so configured by virtue having instructions that, when executed by data processing apparatus, cause the apparatus to perform the actions.

The details of one or more embodiments of the invention are set forth in the accompanying drawings and the description below. Other features and advantages of the invention will become apparent from the description, the drawings, and the claims.

BRIEF DESCRIPTION OF THE DRAWINGS

FIG. 1 is a diagram depicting an example system for providing efficient processing for neural networks.

FIGS. 2A-2B are charts that show levels of sparsity achieved using the techniques disclosed herein.

FIGS. 3A-3B are diagrams that depict types of matrix multiplications.

FIGS. 4A-4B are charts that show performance improvements using the features disclosed herein.

Like reference numbers and designations in the various drawings indicate like elements.

DETAILED DESCRIPTION

In some implementations, a computer system is configured to perform efficient processing for neural networks, using estimation techniques to reduce the amount of data transferred and reduce the amount of computation required. As discussed below, the system can use statistical top-k estimation, using trained predictors allocated from a model's parameters, to enhance processing for a neural network layer. To achieve higher efficiency and lower latency, the system can use the predictors to efficiently identify an approximate top-k fraction of weights feedforward network (FFN) or an approximate top-k fraction of tokens for an attention mechanism.

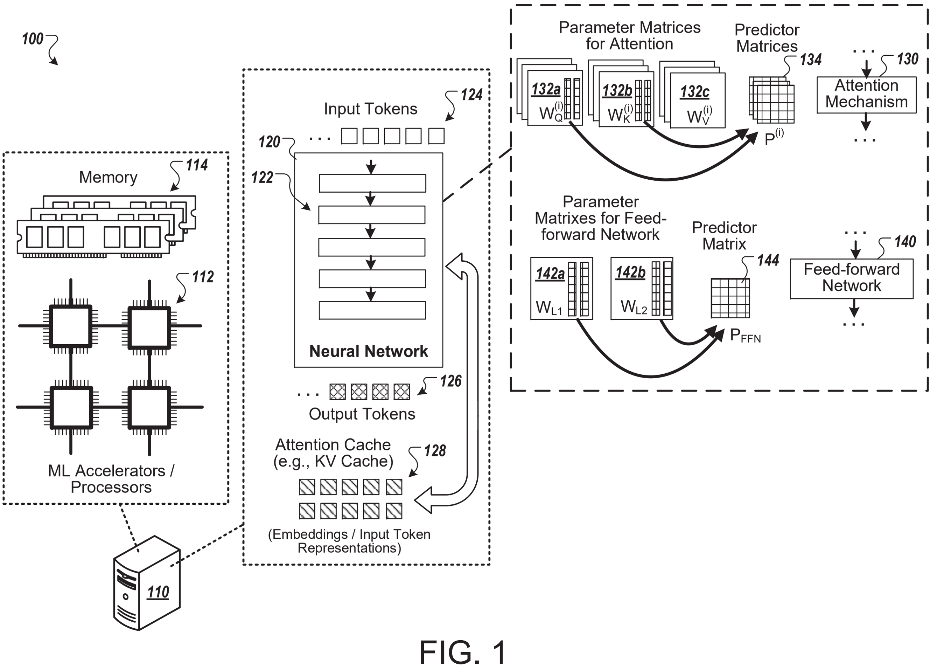

FIG. 1 is a diagram depicting an example system 100 for providing efficient processing for neural networks. The system 100 include a computer system 110, which can be one or more servers, a data center, a workstation, a desktop computer, a laptop computer, a tablet computer, a smart phone, etc. The computer system 110 includes one or more machine learning accelerators or processors 112 (referred to simply as "accelerators 112"), such as tensor processing units (TPUs), graphics processing units (GPUs), central processing units (CPUs), etc. The computer system 110 also includes memory 114, such as high-bandwidth memory (HBM), random-access memory (RAM), etc. The computer system 110 also includes non-volatile data storage to store the neural network 120 and other data.

In the example, the computer system 110 stores a neural network 120 and is configured to efficiently perform inference operations for the neural network 120. The neural network 120 has already been trained, and the computer system 110 stores the parameter values for neural network 120 (e.g., weight values for neurons or nodes of the neural network). The neural network 120 includes multiple layers 122, which can be of various different types (e.g., feedforward layers, attention layers, softmax layers, etc.).

The neural network 120 can include one or more transformers or includes features of the transformer architecture. The techniques described herein can be used for neural networks of many different types. In some implementations, the neural network 120 is a large language model. In some implementations, the neural network is configured to process text data, image data, video data, audio data, or other data. The neural network 120 can be a multimodal neural network that is configured to process input and/or provide output for two or more different type of media or types of data.

When performing processing using the neural network 120, the computer system 110 determines a set of input tokens 124, which can represent text or other input to the neural network 120. The input tokens 124 are typically processed in sequence, using multiple iterations of processing using the layers 122. Often, input tokens are processed with an encoder (e.g., one or more encoder layers) that produce embeddings as input token representations. The embeddings can be stored in an attention cache 128 where the embeddings can be used in further iterations of processing. Representations of output tokens generated by the neural network 120 can also be stored in the attention cache 128. In the neural network 120, each neural network layer 122 receives an input, typically from one or more preceding layers, and produces output, typically provided to one or more subsequent layers. Processing proceeds through the neural network for each of the input tokens 124 sequentially, and the neural network 120 produces a sequence of output tokens as the output of the process.

When performing processing for the neural network 120, a very large number of computations are typically required, which leads to an extended processing time. For many layers of the neural network 120, most of the computation results for the layer have small values or even zero values, and the overall output for the layer is dominated by a much smaller number of high-magnitude results. The neural network 120 provides features to efficiently predict which weight values for a layer, and thus which computations for the layer, will significantly affect the outcome of layer processing, which allows the computer system 110 to skip the less-significant weight values and computations and speed up layer processing while maintaining accuracy. The importance of different weights varies depending on the current state (e.g., the current input and/or context), and so the subset of weights chosen to be processed also varies from one pass through a neural network layer to another.

The computer system 110 can increase the speed of processing for the neural network 120 by reducing the number of computations required for various layers 122 of the neural network 120 and for contents of the attention cache 128. The computer system 110 can achieve this by using estimation techniques to predict a subset of items to be used in processing for a layer 122, and then performing the full processing using only the subset. The subset that is predicted or selected can be determined in a way that reliably includes approximately the top-k fraction of items that are most important or influential to achieving an accurate result. The processing for the subset is much less than would be needed to fully process the layer, which can result in significant reduction in the processing time for inference processing.

The example of FIG. 1 shows additional detail for two different types of components of the neural network 120: an attention mechanism 130 and a feed-forward network 140. Each of these components has parameter matrices 132a-132c, 142a-142b that include parameter values (e.g., weight values) that were learned through the training process for the parameters in the layer. Each of the components also has one or more predictor matrices 134, 144 that also has parameter values learned jointly during training for the parameter matrices 132a-132c, 142a-142b.

The attention mechanism 130 can include one or more layers 122 of the neural network 120. In many cases, the attention mechanism 130 includes multiple layers. The attention mechanism 130 can include multiple attention heads and the index for an attention head is denoted by superscript "(i)." In the example, each attention head can have multiple parameter matrices, e.g., a query weight matrix 132a (labeled $W_Q^{(i)}$), a key weight matrix 132b (labeled $W_K^{(i)}$), and a value weight matrix 132c (labeled $W_V^{(i)}$). Each attention head has its own separate parameter matrices 132a-132c and a corresponding predictor matrix 134 (labeled $P^{(i)}$) that includes parameter values learned jointly during training of the rest of the neural network 120.

The feedforward network (FFN) 140 can include multiple layers. For example, the feedforward network 140 can include a first layer that expands an input to a higher-dimensional space, and activation function, and a second layer that reduces or contracts to a lower-dimensional space. The example shows that the feedforward network 140 includes two parameter matrices 142a-142b, a first parameter matrix 142a (labeled $W_{L1}$) that includes the weight values of a first layer of the feedforward network 140 and a second parameter matrix 142b (labeled $W_{L2}$) that includes the weight values of a second layer of the feedforward network 140. The feedforward network 140 also includes a corresponding predictor matrix 144 (labeled $P_{FFN}$) that includes parameter values learned jointly during training of the rest of the neural network 120.

As illustrated, the parameters of the predictor matrices 134, 144 can be values from the parameter matrices 132a-132c, 142a-142b. For example, a small dedicated subset of parameters from the parameter matrices 132a-132c, 142a-142b can be specifically allocated to serve as values of the predictor matrices 134, 144. As a result, particular columns, rows, or specific values in the parameter matrices 132a-132c, 142a-142b can store the values of the predictor matrices 134, 144, so that the predictors do not require additional parameters beyond those used by the standard Transformer model. This can result in the values of the predictor matrices 134, 144 effectively being embedded in the parameter matrices 132a-132c, 142a-142b.

During training, the values corresponding to the predictor matrices 134, 144 are trained along with the other parameter values. The training process includes the application of statistical top-k selection and the use of sparsity, including the use of the predictor matrices 134, 144 to select which activations to use. This allows the neural network 120 as a whole to adapt and adjust during training to the level of sparsity being applied, and also adapts both the predictor values and the general parameter weights to maximize accuracy with the enforced sparsity. The prediction accuracy improves during training jointly with the overall network prediction accuracy.

In some implementations, the predictor matrices 134, 144 are configured so that, when multiplied by an input vector and a matrix (e.g., a transposed form of a parameter matrix or a matrix representing context for the network), the result is a set of importance scores that indicate which elements or items are most likely to result in the highest magnitude result.

For example, for the feed-forward network 140, multiplying an input vector, the predictor matrix 144 and a transposed form of the parameter matrix 142a for the first layer can result in a set of importance scores. These importance scores or predictor scores can indicate which portions of the parameter matrix 144 are expected to be most significant and result in the highest values in an activation map, given the current input vector. The importance scores can indicate, for example, particular rows or columns of the parameter matrix 142a that have the values that are expected to lead to the most significant results. This allows the computer system 110 to limit the computation of processing for the first layer parameter matrix 142a during processing of the feed-forward layer, by performing only the matrix multiplication operations that the importance scores indicated to be most important. The level of sparsity enforced for processing the first layer can be varied depending on the implementation, but is often less than half the number of values in the parameter matrix 142a, such as 20%, 15%, 10%, 8%, 6%, 4%, etc. while still retaining high accuracy. As discussed below, sparsity often results in the activation map created after processing the first layer of the feedforward network 140. By accurately predicting which items are most important before the first layer is processed, processing can be limited to those items predicted to be important, resulting in much lower computational requirements.

For the attention mechanism 130, the predictor matrix 134 can be used to determine which entries in the attention cache 128 are most likely to result in high attention levels. For example, multiplying an input vector, the predictor matrix 134, and a key matrix representing a collection of key vectors for the context can produce importance scores that indicate which of the key vectors are most likely to correspond to high attention for the current input vector. The importance scores indicate which of the context items are most likely to be the most important, and so the computer system 110 can perform attention processing for only those items. In many cases, the system is set so that the amount of items selected from the context for processing is less than half of the context, or even a smaller fraction, such as 20%, 15%, 10%, 8%, 6%, 4%, etc. while still retaining high accuracy. This can greatly reduce the amount of processing needed to compute attention.

In some implementations, the predictor matrices 134, 144 can be used to create a mask that identifies the most important items and filters out the least important items. For example, each predictor matrix 134, 144, when multiplied by an input vector and another matrix (e.g., a transposed form of a parameter matrix 142a or a matrix representing key vectors in the attention cache 128), can form a mask or predictor that has zero values corresponding to the least important columns, rows, or elements, while the most important items (e.g., the approximate top-k items) have non-zero values. This results in a mask that can be applied to eliminate computation for columns, rows, or elements, e.g., where zero values represent matrix multiplications that can be skipped.

During inference, the parameter values corresponding to the predictor matrices 134, 144 that were learned through training can be extracted from the parameter matrices 132a-132c, 142a-142b and used to identify the activations that are most significant, to allow processing to be limited to those most-significant activations. In some implementations, the parameter values for the predictor matrices 134, 144 are removed from the parameter matrices from which they are extracted, so that parameter values corresponding to the predictor matrices are used only for the prediction function, and are excluded when the parameter matrices are multiplied to perform layer calculations. In other implementations, the predictor values can serve a dual function, used both as parameter values of the parameter matrices 132a-132c, 142a-142b (e.g., included when the parameter matrices are multiplied in the layer calculations) and as parameter values of the predictor matrices 134, 144.

In the illustrated example, values for the predictor matrices 134, 144 are shown as being part of multiple parameter matrices, e.g., in parameter matrices 132a and 132b for the attention mechanism 130 and in parameter matrices 142a and 142b for the feed-forward network 140. However, values for the predictor matrices 134, 144 can be stored in more or fewer parameter matrices. For example, in some implementations, the parameter values for the predictor matrix 144 are stored in only a single parameter matrix 142a and not in the parameter matrix 142b. Similarly, for the attention mechanism 130, the parameter values for the predictor matrix 134 can be stored in only one type of matrix, such as the query matrices 132a or the key matrices 132b, and not in multiple matrices for each attention head. In some implementations, the values for the predictor matrices 134 can be stored in other storage, separate from the parameter matrices 132a-132c, 142a-142b.

The neural network 120 can implement an architectural variant of the Transformer model that drastically reduces the FLOPs count while maintaining comparable quality and an identical parameter count. This variant can be referred to as a Spark Transformer, and the reduction in processing is achieved by introducing sparse activations in the feedforward network 140 and/or the attention mechanism 130. In the feedforward network 140, this sparsity engages only a subset of parameters for each input. In the attention mechanism 130, it limits the number of tokens that each token attends to. The system can achieve this sparsity through statistical top-k, a lightweight approximate algorithm that is well-suited for accelerator hardware and minimizes training slowdown.

The Spark Transformer architecture can achieve both high activation sparsity and low-cost prediction in both the feedforward network 140 and attention mechanism 130. Notably, the neural network 120 with the Spark Transformer technique can be trained in a single stage without requiring separate post-processing, and the neural network 120 maintains quality without introducing additional parameters. This makes the architecture a suitable drop-in replacement for standard Transformer models. Because the feedforward network 140 and attention mechanism 130 components dominate the computational cost in large Transformers with long contexts, Spark Transformer drastically reduces the overall FLOP count for decoding a token.

The Spark Transformer architecture incorporates dedicated predictors 134, 144 to identify the activated entries. These predictors 134, 144 are formed by allocating a portion of the parameters of the neural network 120 and are trained jointly with the rest of the neural network 120. This approach distinguishes the current technique from other methods that introduce sparsity and predictors after training. Methods that introduce sparsity after training often lead to increased training costs, additional model parameters, and complex modifications to the model architecture. The technique shown for the neural network 120, however, avoids these disadvantages by maintaining the existing model structure, maintaining training computational costs, and not increasing the amount of parameters to be trained.

The neural network 120 demonstrates remarkable efficiency, achieving competitive performance on standard benchmarks while exhibiting significant sparsity. In one example, it utilizes only 8% nonzeros in the feedforward network 140 activation (e.g., 92% of activations are forced to zero) and attends to a maximum of 256 tokens. This results in a $3.1\times$ reduction in FLOPs, yielding a $1.70\times$ speedup for prefill and a $1.79\times$ speedup for decoding on a 16-core CPU VM.

The machine learning landscape has witnessed a surge in large-scale Transformer models, pushing the boundaries of language understanding and generation. However, the pursuit of scale is often constrained not by limitations in model quality, but by the escalating computational costs associated with increasing parameter counts. This challenge is further exacerbated by the development of models that handle increasingly long context inputs, where computational demands grow proportionally with context length.

Sparse activation is an approach for addressing the computational challenges posed by both large model size and long context length. To handle large models, sparse activation reduces costs by engaging only a small subset of model parameters for each input. This approach has gained significant interest following the discovery of an intriguing phenomenon: the feed-forward networks (FFNs) in classic Transformers exhibit natural activation sparsity. In other words, these models demonstrate sparsity without explicit enforcement. This inherent sparsity, reaching remarkable levels like 3% nonzeros in some cases, presents an opportunity for substantial efficiency gains with modifications to the model architecture.

Unfortunately, this natural sparsity is absent in the latest generation of models, which have adopted non-ReLU activation functions, such as gated non-ReLU activation functions or Gaussian error linear units (GELU). To re-introduce sparsity, some have explored extra pretraining steps, either by switching back to ReLU activations or by adding top-k thresholding. This is sometimes combined with training a low-cost predictor to identify activated parameters. However, these approaches not only complicate the training procedure and incur extra training costs, but also introduce additional parameters (e.g., for the predictor) and have yet to demonstrate high sparsity levels without compromising performance.

Sparse activation for attention, often called sparse attention, faces a similar challenge. Sparsity is used to efficiently handle long context input by limiting the number of tokens each token attends to. One approach is top-k attention, which applies a top-k mask to the attention coefficients. This can be combined with a low-cost predictor to maximize efficiency. However, achieving high sparsity without sacrificing quality has remained a challenge.

The Spark Transformer architecture used in the neural network 120 leverages the interpretation of both the feedforward network 140 and the attention mechanism 130 as key-value lookup tables to provide a unified solution for achieving sparsity and prediction. Specifically, the predictor 134, 144 is obtained by repurposing a few dimensions of the query and key vectors to produce an importance score for each key-value pair. A top-k thresholding is then applied to these scores to identify the activated pairs. Some approaches for top-k thresholding involve sorting the activation entries, which is inefficient on training accelerators 112 like TPUs. To avoid this inefficiency, the neural network 120 is designed to use statistical top-k, an algorithm for approximate nearest neighbor search that requires only 2N FLOPs for a vector of length N. This is achieved by fitting a Gaussian distribution to the activation entries and estimating a threshold that yields approximately the top-k entries using the Gaussian quantile function, which only requires computing the mean and standard deviation of the activation maps.

In one example, a Spark Transformer neural network was pretrained using the Gemma-2 recipe, resulting in a model called Spark Gemma-2. Evaluation on standard benchmarks demonstrated that Spark Gemma-2 closely matches the quality of Gemma-2, even with a high degree of sparsity: only 8% activated entries in the FFN and a maximum of 256 attended tokens in attention. This sparsity leads to a 3.1× reduction in overall FLOPs for Spark Gemma-2 compared to Gemma-2. Using this sparsity, model efficiency is evaluated with gemma.cpp, a C++ inference engine optimized for serving Gemma models on CPUs, which shows a speedup of up to 1.79×. Notably, on a readily available 4-core cloud VM, Spark Gemma-2 achieved a decoding speed of 86 ms per token, surpassing typical human reading speed. This increased efficiency enables wider access to high-quality models for users with limited access to high-FLOP devices, such as GPUs and TPUs.

An example of the improvement in FLOPs per token is shown in Table 1 below. Table 1 shows a FLOPs-per-token comparison for the Spark Transformer vs. a standard Transformer. In a standard Transformer, we assume multi-head attention where the sum of head dimensions equals $d_{model}$, and an FFN with non-gated activation and width $d_{ff}$. Here, $n_{ctx}$ represents the context length for the target token. The computational cost is primarily determined by the FFN (assuming $d_{ff} \gg d_{model}$, which is typical) and the attention dot product (assuming a long context length). Spark Transformers introduce sparsity parameters, $k_{ff}$ and $k_{attn}$, to reduce FLOPs. Setting $k_{ff} = 8\% \times d_{ff}$ and $k_{attn} = 256$ (as in Gemma) achieves a 3.2× FLOPs reduction in the FFN, a 4× reduction in the attention dot product, and a 3.1× reduction overall (assuming $n_{ctx} = 8$k). (The FLOPs calculation omits non-leading-order terms (e.g., those arising from embedding, normalization, and nonlinear layers) and excludes the number of layers as a common multiplier.)

TABLE 1

| Operation | FLOPs per Token[1] | |
| --- | --- | --- |
| | Standard Transformer | Spark Transformer (Ours) |
| FFN | $2d_{model}d_{ff}$ | $0.5d_{model}d_{ff} + 1.5d_{model}k_{ff}$ |
| Attention dot product | $2d_{model}n_{ctx}$ | $0.5d_{model}n_{ctx} + 1.5d_{model} \min\{k_{attn}, n_{ctx}\}$ |
| Attention linear projection | $4d_{model}^2$ | $4d_{model}^2$ |

The statistical top-k approach will now be described in more detail. Statistical top-k is an approximate algorithm for obtaining the *k* largest entries of an input vector. The *soft-thresholding operator* is defined for an arbitrary real vector and a scalar threshold $\theta$. The threshold operates by subtracting the threshold value from each of the values in the vector and replacing any values less than zero with zero. For example, for a threshold of 0.3, a value of 0.5 would be reduced to 0.2, and a value of 0.2 would be set at the floor of zero. Statistical top-k applies the soft thresholding operator using a threshold that is determined as the mean of a set of values plus the standard deviation of the set of values times the result of a quantile function (e.g., inverse of the cumulative distribution function) of the standard Gaussian distribution.

Statistical top-k operates by first computing a threshold such that approximately a predetermined number *k* entries of values exceed the threshold, and then applying the soft-thresholding operator with this threshold to the set of values to obtain a sparse output. These two components are discussed next.

For threshold estimation, the threshold is designed such that, if the entries are drawn from a Gaussian distribution, approximately *k* out of the total number of entries will exceed this threshold. The computation of the threshold is highly efficient, requiring only 2*d* FLOPs to compute the mean and standard deviation of the samples. This contrasts sharply with a naive sorting-based approach, which has $O(d\log d)$ complexity. While the Gaussian quantile function lacks a closed-form solution, high-precision piecewise approximation algorithms with constant complexity are available in standard software packages like SciPy, and so are readily applicable.

The threshold is then used to achieve sparsification. Given the threshold, a straightforward approach to obtain a sparse vector is to set all entries of *x* below the threshold to zero, preserving the remaining values. This operator, sometimes referred to as *hard thresholding,* suffers from discontinuity, potentially hindering its suitability for gradient-descent-based training.

To address this, Statistical-Top$_k$ employs the soft-thresholding operator. This operator first shrinks all entries by the threshold and then sets all entries below 0 to 0. Soft thresholding offers the advantages of being continuous and differentiable almost everywhere (except when entries coincide exactly with the value of the threshold). For complete differentiability, the system can utilize a smoothing function like the Huber loss.

Soft thresholding can also be expressed as attempting to find a vector that minimizes both its squared $\ell_2$ distance to the input x and its $\ell_1$ norm, with the threshold balancing these terms. Given the sparsity-promoting nature of the $\ell_1$ norm, soft thresholding effectively finds a sparse approximation of the input set of values.

The Statistical Top$k$ approach is superior to other approaches that have been used to seek sparsity. Various techniques have been attempted to find an output that is *close* to the input, subject to a sparsifying regularization. The major difference in approaches often lies in the choice of the sparse regularization. For example, Statistical-Topk uses $\ell_1$ normalization, whereas other techniques such as soft top-k and *SparseK* use entropy and Gini entropy, respectively. The choice of $\ell_1$ makes Statistical-Top$_k$ superior in that it has a closed form solution provided by soft-thresholding, which only requires a number of FLOPs based on the dimension or number of values assessed. In contrast, soft top-*k* and *SparseK* both do not have closed form solutions and require an iterative algorithm with a FLOP count dependent on the number of iterations. In addition, there is no guarantee that soft top-k and *SparseK* can obtain (approximately) *k* nonzero entries as output. In general, $\ell_1$ normalization involves calculating the sum of the absolute values of a vector's components. It calculates the distance between points by summing the differences along each axis.

Next, the features of Spark FFN and Spark Attention, the two components of the Spark Transformer architecture, will be described in more detail. These techniques are implemented by the feedforward network 140 and the attention mechanism 130 of the neural network 120.

In a standard Transformer, FFNs are two-layer multi-layer perceptrons that map an input token to an output vector. Each of the two layers has a matrix of trainable parameters, of size $d_{mode1}$ by $d_{ff}$. The output is generated by multiplying the transposed form of the first layer's matrix by the input vector, applying an activation function to the result to create an activation map, and then multiplying the activation map by the second matrix of parameters. The activation function is typically a nonlinear activation function. For the neural network 120 shown in FIG. 1, which represents the Spark FFN variant, the matrix for the first layer is shown as parameter matrix 142a (labeled $W_{L1}$) and the matrix for the second layer is shown as parameter matrix 142b (labeled $W_{L2}$).

In a standard Tranformer FFN, each of the matrix multiplications in generating the output of the FFN has $d_{mode1} \cdot d_{ff}$ FLOPs and so the overall computation cost is $2d_{mode1} \cdot d_{ff}$. Previous work shows that when the activation function is ReLU, the activation map (e.g., results of applying the activation function to the first matrix multiplication) is very sparse after model training. The sparsity can be used to reduce the computation costs in the calculation of its product with the second layer weight matrix, reducing the overall FLOPs count of FFN to $d_{mode1} \cdot (d_{ff} + k)$, where $k \ll d_{ff}$ is the number of nonzero entries in the activation. Note that the sparsity cannot be used to reduce the computation costs associated with the first matrix multiplication (e.g., for the matrix for the first layer), which constitutes half of the total FLOPs in FFN. This happens because the beneficial sparsity appears only after the full multiplication with the first layer weight matrix and the application of the activation function, and so in the standard Transformer model it is not apparent in advance which elements will be the most important.

In order to reduce FLOPs count in the first layer of FFN as well, Spark FFN can be used to generate a predictor with importance scores. The set of importance scores can be used as a mask to eliminate multiplications that are not likely to result in the most important (e.g., approximately k most important) activations in the activation map. Instead of applying the activation function to the multiplication of the first layer weight matrix (transposed) and the input vector, the activation function in Spark FF applies the activation function to only a subset of the multiplication results. The predictor matrix 144 is used to generate a set of importance values that can be used as a mask or selector to limit the number of multiplications to only a fraction of the typical multiplications that would normally be made using the first layer parameter matrix 142a. The Spark FFN can be expressed as follows:

$$\text{Spark-FFN}(\boldsymbol{q}; \boldsymbol{K}, \boldsymbol{V}, k, r) \overset{\text{def}}{=} \boldsymbol{V} \cdot \left( \sigma \left( \text{Statistical-Top}_k(\boldsymbol{K}^\top \boldsymbol{P} \boldsymbol{q}) \right) \odot \left( \boldsymbol{K}^\top (\boldsymbol{I} - \boldsymbol{P}) \boldsymbol{q} \right) \right) \in \mathbb{R}^{d_{\text{model}}}$$ . In the equation, q represents the input vector, K represents the first layer parameter value matrix 142a, V represents the second layer parameter value matrix 142b, k is a hyperparameter representing a sparsity level (e.g., a target number of nonzero values for the result), and r is a hyperparameter that sets a rank (e.g., dimension or size) of the predictor matrix. Both k and r can be set to tune the amount of computation, with k setting the target number of non-zero values for which multiplication will be performed and r setting the size of the predictor matrix and thus the computational cost of generating the importance scores.

In more detail, *P* is a fixed matrix, representing the predictor matrix 144, where some columns or rows are set to a value of 1 (where the amount set to 1 is specified by the hyperparameter r) and the remainder of the columns or rows are set to 0. In this way, the predictor matrix 144 that the term $K^\top Pq$ serves as a low-rank predictor of the location of the nonzero entries, which allows the system to obtain efficiency benefits in computing $K^\top(I - P)$ and the later multiplication with *V* after applying the activation function.

In Spark-FFN, the computer system 110 can first compute importance scores (e.g., multiplication of the first layer parameter matrix 142a, the predictor matrix 144, and the input vector) as a low-rank predictor. After passing the output through the Statistical-Top$_k$ function, which selects approximately the *k* most important entries, followed by the activation function, the system obtains a sparse output. Importantly, after obtaining the sparse output there is no need to perform the full computation of the other two matrix multiplications, e.g., , $K^\top(I - P)q$ and the multiplication with V. Instead, the system can perform a sparse matrix multiplication with a drastically reduced FLOPs count, which is an increasing function of *r*. In other words, *r* controls the computation cost. In some cases, the best model quality is obtained when r is about half of the model dimension, $d_{mode1}$. In this case, the total FLOP count of Spark FFN is approximately $0.5 \cdot d_{mode1} \cdot d_{ff} + 1.5 \cdot d_{mode1} \cdot k$, which is a 4-times reduction when *k* is very small.

Many of the most recent Transformers, including Gemma 2, use a variant of the standard FFN in where the activation function is replaced with a gated activation function. Spark FFN and Gated FFN both have two linear maps in the first layer and one in the second layer. However, unlike Gated FFN, (1) Spark FFN adds a statistical top-*k* to obtain sparsity, and (2) the input to the first layers of Spark FFN are obtained from splitting the dimensions of the input. The latter change has the benefit that it offers a convenient means of controlling the number of FLOPs from tuning the choice of *r*.

The features of Spark Attention will now be described. In a standard multi-head attention layer, an input is mapped to a query, a key, and a value vector of dimension $d_{attn}$ for each attention head *i*. There are three matrices of trainable weights for each attention head, e.g., a key matrix, a value matrix, and a query matrix. The key vectors can all be collected into a key matrix K and value vectors are collected into a value matrix V. Attention output from all heads are concatenated followed by a linear map to project to a dimension of $d_{mode1}$.

Following a similar strategy in obtaining Spark FFN, here we present Spark Attention as follows (with the index for the particular attention head omitted for simplicity):

$$\text{Spark-Attention}(\boldsymbol{q}:\boldsymbol{K}.\boldsymbol{V},k,r) \stackrel{\text{def}}{=}$$
$$\boldsymbol{V}\cdot\left(\text{softmax}\left(\text{Statistical-Top}_k^{(-\infty)}(\boldsymbol{K}^\top \boldsymbol{P}\boldsymbol{q})\right) \odot \text{softplus}\left(\boldsymbol{K}^\top(\boldsymbol{I}-\boldsymbol{P})\boldsymbol{q}\right)\right)$$

In the equation above, P represents the predictor matrix 134 for the attention head, which is a fixed matrix with values of 1 in certain rows or columns and values of 0 otherwise. Statistical- $\text{Top}_k^{(-\infty)}$ is a slight variant where the entries below the threshold are set to -∞ instead of 0, so that these entries become zero after passing through the softmax. Finally, a softplus nonlinearity defined as the entrywise softplus function, i.e., log(1 + exp(x)), is applied to the term $K^\top(I - P)$ as this is empirically observed to offer quality benefits.

By noting that the output of the softmax is expected to be sparse with approximately *k* nonzero entries, the computation costs associated with $K^\top(I - P)q$ and in the multiplication with *V* can be drastically reduced. In particular, if we set the hyperparameter r at half of the attention dimension $d_{attn}$, then the FLOPs per token becomes $0.5d_{mode1}n_{ctx} + 1.5d_{mode1}\min\{k_{attn}, n_{ctx}\}$, which is nearly a 4x reduction when the attention dimension is much smaller than the size of the context.

The Spark Transformer was compared in various experiments to other architectures, such as Gemma-2 2B. For example,, Gemma-2 2B is a decoder-only Transformer model with 2B parameters pretrained on 2 trillion tokens of primarily English data. A Spark Transformer version of Gemma-2 2B was created by substituting the FFN and Attention in Gemma-2 2B with Spark FFN and Spark Attention, respectively, and carrying out exactly the same training procedure on the same training data.

Gemma-2 uses a model dimension of $d_{mode1}$ = 2304. For FFN, Gemma-2 uses the Gated FFN in Eq. (12) with $d'_{\text{ff}} = 9216$. We replace it with Spark FFN in Eq. (9) with $d_{ff}$ = 13824 so that the parameter count stays the same. In addition, we take k = 1106, which gives a sparsity level of 8%, and r = 1024 (due to sharding constraints, r can only be a multiple of 256).

For Attention, Gemma-2 alternates between a global attention that have a span of 8192 tokens, and a local attention with a 4096 window size, both with $d_{attn}$ = 256. We replace both with Spark Attention where for the latter we use the same 4096 window size. For hyper-parameters, we use k = 256, i.e. each token attends to at most 256 tokens, and r = 128. Extra care was taken for handling position embedding. Gemma-2 uses Rotary Position Embedding which is applied to *q* and the columns of *K*. For Spark Attention, we apply this position encoding to *Pq*, (*I* - *P*)*q*,, the columns of *PK,* and the columns of (*I* - *P*)*K*.

Spark Gemma-2 2B was evaluated on a suite of benchmarks, and the results are shown in Table 2. We observe that Spark Gemma 2 matches the quality of Gemma 2 while having a drastically reduced FLOP count per token.

**Table 2**

|  | ProSparse | LLaMA ReGLU | Gemma-2 | Spark Gemma-2 |
| --- | --- | --- | --- | --- |
| Model size | 7B | 7B | 2B | 2B |
| FLOPs / token | - | - | 4.2B | 1.4B |
| MMLU | (45.5) | (44.8) | 52.1 (52.2) | 50.2 |
| ARC-C | - | - | 50.1 (55.7) | 51.1 |
| GSM8K | (12.1) | (10.6) | 21.2 (24.3) | 21.2 |
| AGIEval | (27.5) | - | 31.8 (31.5) | 31.4 |
| BBH | (35.0) | - | 41.3 (41.9) | 38.8 |
| Winogrande | - | (69.4) | 68.7 (71.3) | 67.3 |
| HellaSwag | - | (74.7) | 73.9 (72.9) | 73.2 |

(continued)

|  | ProSparse | LLaMA ReGLU | Gemma-2 | Spark Gemma-2 |
|---|---|---|---|---|
| MATH | - | - | 16.4 (16.0) | 15.6 |
| ARC-e | - | - | 80.6 (80.6) | 81.3 |
| PIQA | - | - | 78.5 (78.4) | 78.6 |
| SIQA | - | - | 51.6 (51.9) | 51.3 |
| Boolq | - | - | 72.9 (72.7) | 73.3 |
| TriviaQA | - | - | 60.4 (60.4) | 59.4 |
| NQ | - | - | 17.1 (17.1) | 17.1 |
| HumanEval | - | - | 4.3 (20.1) | 6.1 |
| MBPP | - | - | 30.4 (30.2) | 29.0 |

Table 2 above shows a quality evaluation of the Spark Transformer architecture. The Spark Gemma-2 network which replaces FFN and Attention in the standard Gemma-2 by Spark FFN and Spark Attention, respectively. The table also shows comparisons with ProSparse and LLaMA ReGLU, which are two recent models with activation sparsity in FFN. Numbers in parentheses are taken from their original papers. FLOPs / token is computed assuming context length of 8k.

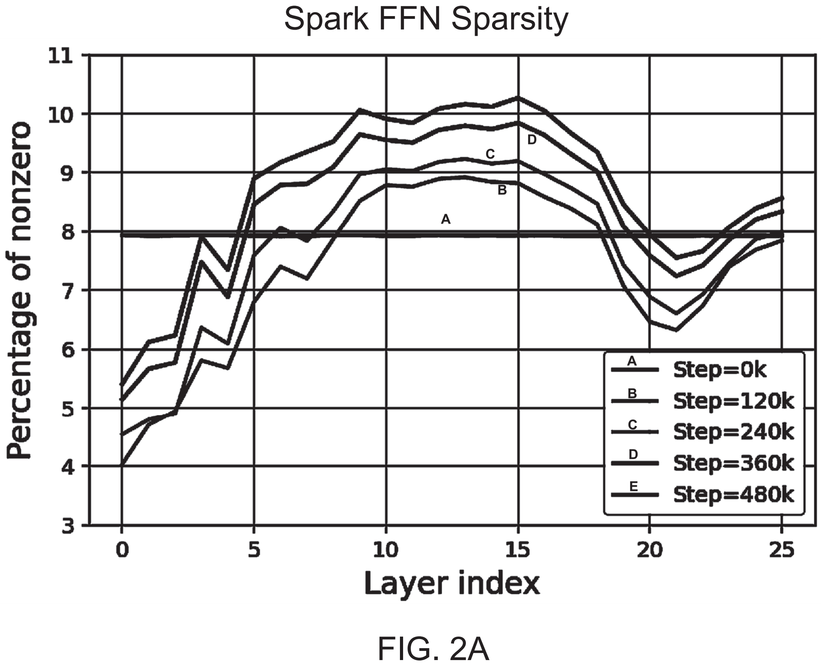

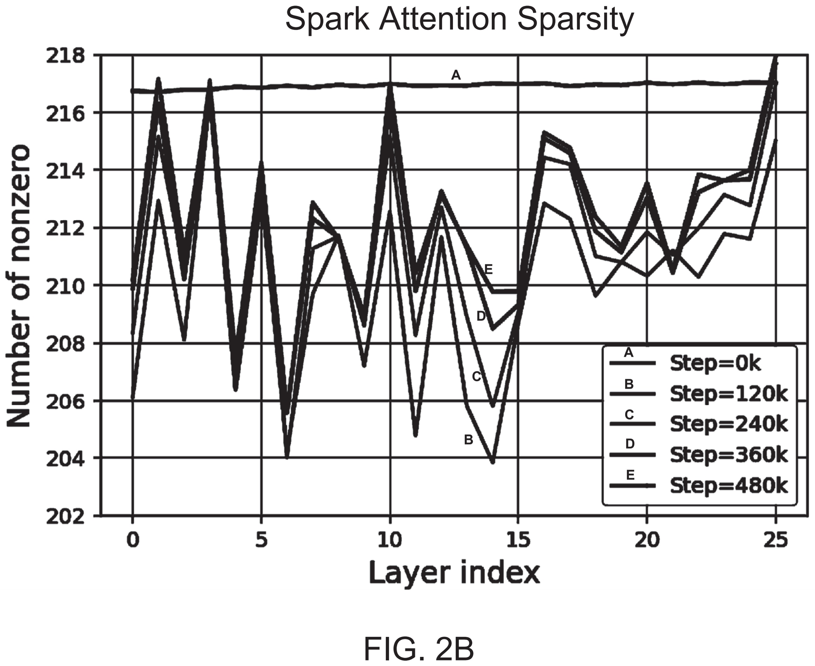

For sparsity, to verify the effectiveness of statistical top-k, we report the level of sparsity measured in terms of percentage of nonzeros in FFN and the number of nonzeros in Attention. At the beginning of model training, statistical top-k produces close to 8% nonzeros in FFN (see FIG. 2A), which aligns well with our hyper-parameter choice of using k/dff = 8% in Spark FFN. This is expected as the model parameters, particularly K in Spark FFN, are randomly initialized, hence the entries of the activation maps are drawn from a Gaussian distribution which is in accor dance with the assumption of statistical top-k. The Gaussian assumption may no longer hold after initialization but statistical top-k still reliably produce a sparsity level close to 8% until the end of training at 480k steps. Sparsity in attention is reported in FIG. 2B, which show that the number of attended tokens is below our hyper-parameter choice of 256 in Spark Attention throughout training. In particular, the numbers are much smaller because the results are from averaging over all tokens many of which have a context length of less than 256. Finally, we observe comparable levels of sparsity during evaluation.

FIGS. 2A-2B show examples of sparsity in the Spark Transformer. FIG. 2A shows sparsity levels (e.g., amount of non-zero values) in the intermediate activation of Spark FFN (i.e., output of GELU). FIG. 2B shows sparsity in intermediate activation of Spark Attention (i.e., output of softmax). These graphs show sparsity across all 26 layers at selected training steps. For Spark FFN, the percentage of nonzero entries is shown out of $d_{ff}$ = 13824 entries. For Spark Attention, the number of nonzero entries (i.e., attended tokens) is shown. In the example, our hyper-parameter choice is to have 8% nonzeros in Spark FFN and at most 256 nonzeros in Spark Attention.

We also evaluated the efficiency benefits of the Spark Gemma-2 2B over standard Gemma-2 2B using gemma.cpp, a C++ inference engine optimized for the Gemma models on CPUs. Our implementation uses sparse matrix multiplication operators, which exploit sparsity in both FFN and Attention, as well as modern CPU vector SIMD operations. Spark Gemma-2 significantly improves the efficiency of transformer models, even in highly FLOP-constrained environments such as CPUs.

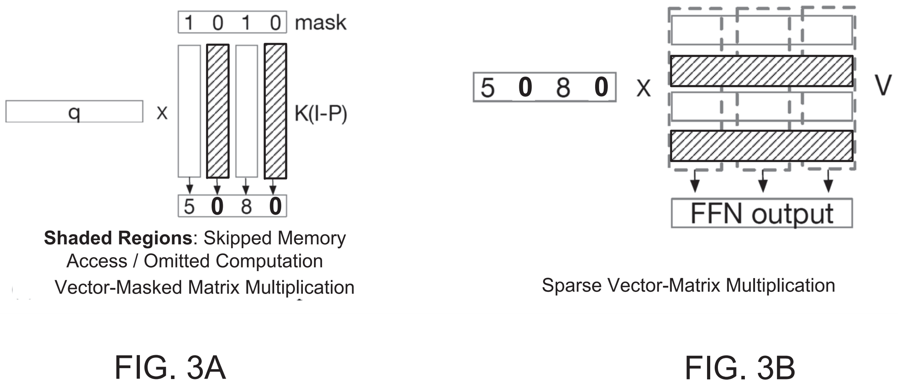

FIGS 3A-3B show an illustration of the matrix multiplication implementation using sparse activation. Either of the techniques shown can be implemented in the computer system 110 to reduce requirements for loading values from memory and to reduce computation during inference processing. FIG. 3A shows Vector Masked Matrix Multiplication, which takes a dense vector $q$, a dense matrix $K^{\top}(I - P)$, and a mask from statistical top-k on $K^{\top}Pq$ to compute $u := (K^{\top}(I - P)q)$ $\odot$ mask. It skips memory loading and compute associated with the masked columns, which helps reduce latency by reducing data transfer and also reduces computation. FIG. 3B illustrates Sparse Vector-Matrix Multiplication, which takes a sparse activation vector u to compute weighted sum of rows in the dense matrix $V$. It skips loading and computation of rows corresponding to 0's in u. To optimize performance, the computer system 110 implement Sparse Vector-Matrix Multiplication using tiling, which helps minimize cross-CPU core synchronization.

In general, the use of the predictor matrices 134, 144 allows the generation of a mask that includes non-zero values for certain computations (e.g., multiplications involving certain columns or rows) and includes zero values (or another symbol to indicating masking) for the other values that are less important. As discussed above, the mask for a feed-forward network 140 can be generated by multiplying the first layer parameter matrix 142a (transposed) with an input vector and the predictor matrix 144. As another example, for the attention mechanism 130, the predictor matrix 134 can be used to generate a mask that provides importance scores that indicate a subset representing the context entries in the attention cache 128 that are predicted to be the most important while masking out context entries predicted to be less important. In both cases, the mask generated using the predictor matrix 134, 144 can reduce the amount of memory transfer and the amount of computation by avoiding the need to load and multiply various rows or columns of data from parameter matrices and/or the attention cache 128.

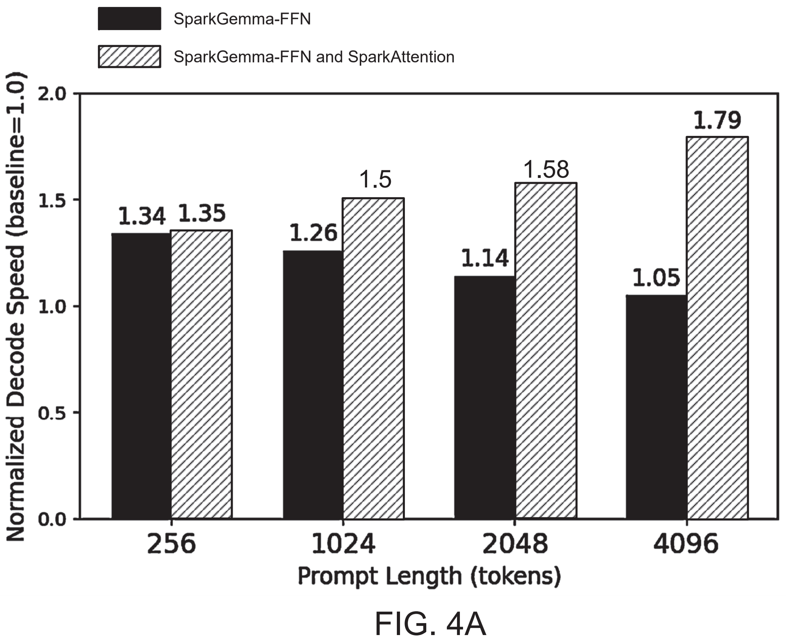

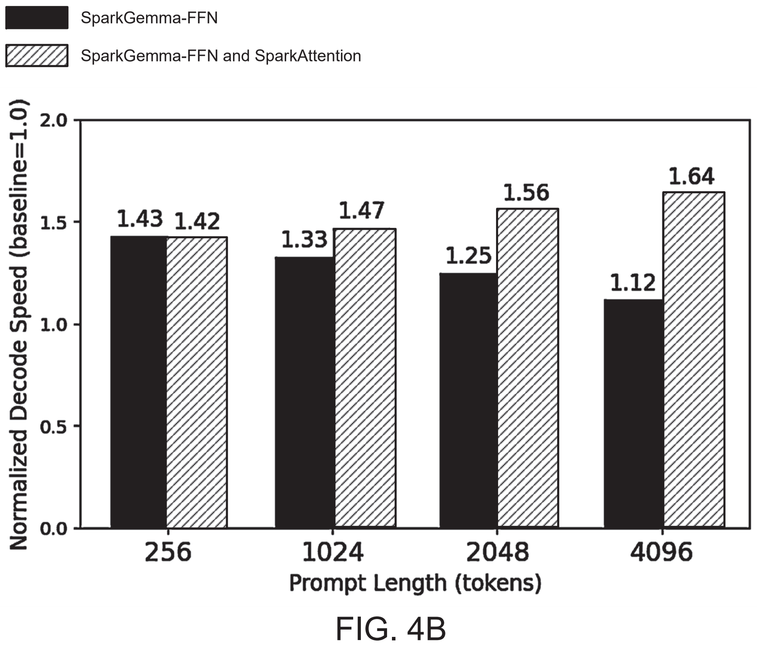

FIGS. 4A-4B illustrate performance measures for two different virtual machine (VM) configurations. These charts show a Spark Gemma-2 2B decoding speedup on CPU relative to the original Gemma-2 2B for varying prompt lengths. Speed is measured as the decoding time per token average over 128 tokens after the prompt. We provide a breakdown of speedup from FFN and Attention by reporting results of SparkGemma-FFN, which contains sparse optimization for FFN only, and SparkGemma-FFN and Attention, which contains sparse optimization for both. We use decode batch size of one.

Specifically, FIGS. 4A-4B show the decoding speed under varying prompt lengths on a 4-Core or a 16-Core CPU. Spark Gemma-2 outperforms the original Gemma-2 model, achieving a speedup that ranges from 1.35x to 1.79x on 16-Core CPU depending on the prompt length. For short prompts (e.g., 256 tokens), the sparse FFN optimization provides most of the speedup, whereas the sparse attention optimization provides the most speedup for longer prompts (e.g. 4096 tokens).

Table 3 below further highlights the efficiency of Spark Gemma-2 in both prefill and decode phases. During the prefill, the prompt is usually chunked into batches since the process is bounded by memory bandwidth. This may reduce the benefit of activation sparsity as different tokens in a chunk may activate different subsets of parameters (in FFN) and attend to different subsets of tokens (in Attention). However, Table 3 shows that Spark Gemma-2 maintains strong performance with a chunk size of 64 tokens, following the default setup in gemma.cpp. A more detailed performance analysis of batching/chunking is provided in the Appendix. In addition, Spark Gemma-2 significantly outperforms the original Gemma-2 during decoding (with batch size=1). Notably, it achieves a decode speed of 86ms per token, which surpasses the average human reading speed (238 words per minute), with a very accessible 4-Core CPU Cloud VM.

**Table 3**

|  | Prefill (ms / token) | Decode (ms / token) |
| --- | --- | --- |
| 4 Core CPU VM | 15 (1.86x) | 86 (1.64x) |
| 16 Core CPU VM | 7 (1.7x) | 33 (1.79x) |

A number of implementations have been described. Nevertheless, it will be understood that various modifications may be made without departing from the spirit and scope of the disclosure. For example, various forms of the flows shown above may be used, with steps reordered, added, or removed.

Embodiments of the invention and all of the functional operations described in this specification can be implemented in digital electronic circuitry, or in computer software, firmware, or hardware, including the structures disclosed in this specification and their structural equivalents, or in combinations of one or more of them. Embodiments of the invention can be implemented as one or more computer program products, e.g., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a tablet computer, a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD-ROM and DVD-ROM disks. The processor and the memory can be supplemented by, or incorporated in, special purpose logic circuitry.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the invention, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures (such as spreadsheets, relational databases, or structured files) may be used.

Particular embodiments of the invention have been described. Other embodiments are within the scope of the following claims. For example, the steps recited in the claims can be performed in a different order and still achieve desirable results.

This specification also includes the following clauses:

Clause 1: 1. A method performed by one or more computers, the method comprising: storing parameter values of a layer of a neural network, wherein the parameter values of the layer include parameter values of a query matrix and a key matrix, wherein the parameter values in a portion of the query matrix or in a portion of the key matrix have been trained to predict levels of importance of key-value pairs; and generating an output of the neural network based on an input token for the neural network, wherein generating the output of the neural network comprises generating an output of the layer, and wherein generating the output of the layer comprises: determining an importance score for each of multiple key-value pairs using the query matrix or the key matrix; selecting a proper subset of the key-value pairs based on the importance scores; and computing output of the layer while limiting computation based on the selected proper subset.

Clause 2: The method of any preceding clause, wherein the layer is a feedforward layer; wherein selecting the proper subset comprises selecting a proper subset of parameters of the feedforward layer; and wherein computing the output of the layer while limiting computation based on the proper subset comprises computing the output of the layer using only the parameter values of the layer indicated by the proper subset of parameters.

Clause 3: The method of any preceding clause, wherein the key matrix or the query matrix is configured to be multiplied by an input vector for the layer to provide a low-rank predictor of the location of the nonzero entries.

Clause 4: The method of any preceding clause, wherein the portion of the key matrix is trained to predict levels of importance of key-value pairs; wherein determining the importance score for each of the multiple key-value pairs comprises performing a matrix multiplication that uses the key matrix and an input vector for the layer and does not use the query matrix, wherein the matrix multiplication generates the importance scores for the key-value pairs; and wherein computing the output of the layer while limiting computation based on the proper subset comprises performing a sparse matrix multiplication limited to parameter values of the layer corresponding to the proper subset of parameters.

Clause 5: The method of any preceding clause, wherein the key-value pairs are entries in a lookup table that represent weight values of the layer.

Clause 6: The method of any preceding clause, comprising controlling computational cost of the processing of the layer using the value of a hyperparameter.

Clause 7: The method of any preceding clause, wherein selecting the proper subset of the key-value pairs based on the importance scores comprises selecting approximately a highest-ranking portion of the key-value pairs.

Clause 8: The method of any preceding clause, wherein selecting the proper subset of the key-value pairs based on the importance scores comprises selecting a predetermined number of the key-value pairs by: determining a threshold for a vector such that approximately the predetermined number entries exceed the threshold; and applying a soft-thresholding operator with the determined threshold to a vector to obtain a sparse output.

Clause 9: The method of any preceding clause, wherein selecting the proper subset of the key-value pairs based on the importance scores comprises selecting the proper subset by applying thresholding using a nearest neighbor search algorithm.

Clause 10: The method of any preceding clause, wherein selecting the proper subset of the key-value pairs based on the importance scores comprises selecting the proper subset by applying thresholding that involves fitting a Gaussian distribution to activation entries and estimating a threshold that yields approximately a highest-magnitude set of entries using a Gaussian quantile function.

Clause 11: The method of clause 10, wherein fitting the Gaussian distribution comprises computing a mean and standard deviation of one or more activation maps.

Clause 12: The method of any preceding clause, wherein computing the output of the layer while limiting computation based on the selected proper subset comprises computing the output of the layer using the parameter values of the layer indicated by the proper subset of parameters and setting other parameter values to zero.

Clause 13: The method of clause 1, wherein the layer is an attention layer; wherein selecting the proper subset comprises selecting a proper subset of entries in a context for the neural network; and wherein computing the output of the layer while limiting computation based on the proper subset comprises computing the output of the attention layer for only the entries in the context indicated by the proper subset of parameters.

Clause 14: The method of clause 13, wherein the entries in the context comprise vectors that are embeddings or representations corresponding to input tokens in a sequence of input tokens for the neural network.

Clause 15: The method of clauses 13 or 14, wherein selecting the proper subset of entries in the context for the neural network comprises selecting, based on the importance scores, a predetermined number of entries in the context that are predicted to result in the highest attention scores; and wherein computing the output of the layer while limiting computation based on the proper subset comprises computing the output of the attention layer for only the predetermined number of entries in the context indicated by the proper subset of parameters.

Clause 16: The method of any of clauses 13 to 15, wherein the key matrix or the query matrix is configured to be multiplied by an input vector for the attention layer to provide a low-rank predictor of the location of the nonzero attention scores for entries in the context.

Clause 17: The method of any of clauses 13 to 16, wherein the portion of the key matrix is trained to predict levels of importance of entries in the context; and wherein determining the importance score for each of the multiple key-value pairs comprises performing a matrix multiplication that uses the key matrix and an input vector for the layer and does not use the query matrix, wherein the matrix multiplication generates the importance scores for the entries in the context.

Clause 18: The method of any of clauses 13 to 17, comprising controlling computational cost of the processing of the attention layer using the value of a hyperparameter.

Clause 19: The method of any of clauses 13 to 18, wherein selecting the proper subset of the entries in the context is based on the importance scores comprises selecting approximately a highest-ranking portion of the entries in the context.

Clause 20: The method of any of clauses 13 to 19, wherein selecting the proper subset of the entries in the context based on the importance scores comprises selecting a predetermined number of the entries in the context by: determining a threshold such that approximately the predetermined number entries exceed the threshold; and applying a soft-thresholding operator with the determined threshold to select the proper subset.

Clause 21: The method of any of clauses 13 to 20, wherein selecting the proper subset of the entries in the context based on the importance scores comprises selecting the proper subset by applying thresholding using a nearest neighbor search algorithm.

Clause 22: The method of any of clauses 13 to 21, wherein selecting the proper subset of the entries in the context based on the importance scores comprises selecting the proper subset by applying thresholding that involves fitting a Gaussian distribution and estimating a threshold that yields approximately a highest-magnitude set of entries using a Gaussian quantile function.

Clause 23: The method of any of clauses 13 to 22, wherein computing the output of the layer while limiting computation based on the selected proper subset comprises computing the output of the layer using the parameter values of the layer indicated by the proper subset of parameters and setting other parameter values to negative infinity so that such entries become zero after passing through a softmax function.

Clause 24: The method of any of clauses 13 to 23, wherein determining the importance scores comprises applying a softplus nonlinearity.

Clause 25: The method of any of clauses 13 to 24, wherein generating the output of the neural network is performed by one or more processor having on-chip memory and associated off-chip memory; and wherein the method includes, based on the selected subset, selectively loading entries from the context from the off-chip memory into the on-chip memory for processing by the attention layer, such that the entries loaded for processing by the attention layer are limited to the entries indicated by the selected subset.

Clause 26: The method of any preceding clause, wherein generating the output of the neural network is performed by one or more central processing units.

Clause 27: The method of any preceding clause, wherein generating the output of the neural network is performed by one or more accelerators having on-chip memory and associated off-chip memory.

Clause 28: The method of clause 29, wherein the one or more accelerators comprise one or more graphics processing units or tensor processing units.

Clause 29: The method of any of clauses 1 to 12, wherein generating the output of the neural network is performed by one or more processor having on-chip memory and associated off-chip memory: based on the selected subset, selectively loading parameter values of the layer from the off-chip memory into the on-chip memory for processing to compute the output of the layer.

Clause 31: A method performed by one or more computers, the method comprising: creating a neural network comprising multiple layers of nodes; representing parameters of a layer of the neural network using a query vector and a key vector; allocating a portion of the query vector or the key vector as a predictor to produce importance scores indicative of levels of importance of key-value pairs; and training the neural network, including training parameter values in the portion allocated as a predictor jointly with the other parameters of the neural network model.

Clause 32: The method of clause 31, wherein the layer is a feedforward layer; and wherein allocating of the portion of the query vector or the key vector to produce an importance scores indicative of levels of importance of key-value pairs comprises allocating the portion to predict of the location of the nonzero entries in an activation map corresponding to parameters of the feedforward layer.

Clause 33: The method of clause 31, wherein the layer is an attention layer; and wherein allocating of the portion of the query vector or the key vector to produce an importance scores indicative of levels of importance of key-value pairs comprises allocating the portion to predict of the location of entries in the context having the highest attention scores.

Clause 34: The method of any of clauses 31 to 33, wherein training the neural network comprises training the neural network using operations of the method of any of clauses 1 to 30 to generate an output of the neural network or an output of the layer.

Clause 35: A system comprising one or more computers and one or more storage devices storing instructions that are operable, when executed by the one or more computers, to cause the one or more computers to perform the operations of the respective method of any of clauses 1-34.

Clause 36: One or more non-transitory computer-readable media encoded with instructions that, when executed by one or more computers, cause the one or more computers to perform the operations of the respective method of any of clauses 1-34

**Claims**

1. A method performed by one or more computers, the method comprising:

   storing, by the one or more computers, parameter values of parameter matrices of one or more layers of a neural network, wherein the parameter values of the parameter matrices comprise (i) weight values of the one or more layers of the neural network, and (ii) predictor values that have been trained to predict levels of importance of items processed by the neural network, wherein the weight values and the predictor values are trained jointly during training of the neural network; and
   generating, by the one or more computers, an output of the neural network based on an input token for the neural network, wherein generating the output of the neural network comprises generating an output of the one or more layers, and wherein generating the output of the one or more layers comprises:

      determining, by the one or more computers, a value for each of multiple items using the predictor values, wherein determining the values comprises generating a vector of values by computing a multiplication involving a predictor matrix comprising the predictor values and a query vector that is based on an input to the one or more layers;
      selecting, by the one or more computers, a proper subset of the items based on the values in the vector, wherein selecting the proper subset comprises (i) determining a threshold level based on a calculation using the values and (ii) applying a soft thresholding operator based on the determined threshold to obtain a sparse vector representing the selected subset of the items; and
      generating, by the one or more computers, output of the one or more layers including by limiting computation based on the selected proper subset using the sparse vector.

2. The method of any preceding claim, wherein the one or more parameter matrices are trained such that multiplying at least one parameter matrix for a layer with an input vector for the layer and the predictor matrix provides a low-rank predictor of locations of the most important items.

3. The method of any preceding claim, wherein determining the threshold level comprises applying a quantile function of a standard Gaussian distribution of the values.

4. The method of any preceding claim, wherein applying the soft thresholding operator based on the determined threshold comprises:

reducing each of the values in the vector by the determined threshold; and
after reducing the values, setting negative values to a predetermined value.

5. The method of any preceding claim, wherein the one or more layers comprise a feedforward network that includes a first layer and a second layer;

wherein the sparse output vector is an output of the first layer of the feedforward network; and
wherein computing the output of the one or more layers comprises performing processing for the second layer of the feedforward network by limiting computation for the second layer to non-zero values of the sparse vector.

6. The method of any preceding claim, wherein the one or more layers comprise a feedforward network that includes a first layer and a second layer;

wherein determining the value for each of multiple items using the predictor values comprises generating the vector of values by computing a multiplication of a parameter matrix of a first layer of the feedforward network, a predictor matrix comprising the predictor values corresponding to the feedforward network, and a query vector representing input to the feedforward network; and
generating, by the one or more computers, output of the one or more layers including by:

applying an activation function to the sparse vector to generate an activation map; and
limiting computation for the first layer of the feedforward network and the second layer of the feedforward network to partial computation by performing sparse matrix multiplication using the activation map.

7. The method of any preceding claim, wherein the one or more layers are part of an attention mechanism of the neural network;

wherein selecting the proper subset comprises selecting a proper subset of entries in a context for the neural network; and
wherein generating the output of the one or more layers comprises computing the output of the attention mechanism for only the entries in the context indicated by the proper subset of parameters.

8. The method of claim 7, wherein the entries in the context comprise vectors that are embeddings or representations corresponding to input tokens in a sequence of input tokens for the neural network or to output tokens in a sequence of output tokens for the neural network.

9. The method of claim 7 or claim 8, wherein selecting the proper subset of entries in the context for the neural network comprises selecting, based on the values, a portion of the number of entries in the context that are predicted to result in the highest attention scores.

10. The method of any preceding claim, wherein the one or more layers are part of an attention mechanism of the neural network;

wherein determining the value for each of multiple items using the predictor values comprises generating the vector of values by computing a multiplication of a matrix of key vectors from a key-value cache, a predictor matrix comprising the predictor values corresponding to the attention mechanism, and a query vector based on an input vector for the attention mechanism; and
generating, by the one or more computers, output of the one or more layers including by:

applying a nonlinearity to the sparse vector to generate a result; and
limiting computation for the attention mechanism by limiting attention processing to entries in the key-value cache corresponding to non-zero values in the result.

11. The method of claim 10, wherein the nonlinearity is a softmax function.

12. The method of any preceding claim, comprising controlling computational cost of generating the output of the one or more layers using the value of a hyperparameter, wherein the value of the hyperparameter sets a level of sparsity to achieve through the selection, to adjust computation cost of calculating activations at one or more layers of the neural network.

13. The method of any preceding claim, comprising controlling computational cost of determining the vector of values using the value of a hyperparameter, wherein the value of the hyperparameter sets a rank of the predictor matrix.

14. A system comprising:

one or more computers; and
one or more computer-readable media storing instructions that are operable, when executed by the one or more computers, to cause the one or more computers to perform the operations of the method of any of claims 1-13.

15. One or more non-transitory computer-readable media storing instructions that are operable, when executed by one or more computers, to cause the one or more computers to perform the operations of the method of any of claims 1-13.

EP 4 722 979 A1

**FIG. 1**

Spark FFN Sparsity

| | |
|---|---|
| A | Step=0k |
| B | Step=120k |
| C | Step=240k |
| D | Step=360k |
| E | Step=480k |

FIG. 2A

EP 4 722 979 A1

FIG. 2B

**Shaded Regions**: Skipped Memory
Access / Omitted Computation

Vector-Masked Matrix Multiplication

## FIG. 3A

Sparse Vector-Matrix Multiplication

## FIG. 3B

EP 4 722 979 A1

FIG. 4A

FIG. 4B

| | | Europäisches Patentamt European Patent Office Office européen des brevets | **EUROPEAN SEARCH REPORT** | Application Number EP 25 20 6320 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHUO YANG ET AL: "Post-Training Sparse Attention with Double Sparsity", ARXIV.ORG, CORNELL UNIVERSITY LIBRARY, 201 OLIN LIBRARY CORNELL UNIVERSITY ITHACA, NY 14853, 11 August 2024 (2024-08-11), XP091850332, * abstract; figure 2; table 3 * * 1. Introduction * * 4. Double Sparsity * * Algorithm 1 * ----- | 1-15 | INV. G06N3/045 G06N3/0495 G06N3/0499 G06N3/0985 G06N3/08 |
| A | Song Yixin ET AL: "PowerInfer: Fast Large Language Model Serving with a Consumer-grade GPU", , 16 December 2023 (2023-12-16), XP093345106, DOI: 10.48550/arXiv.2312.12456 Retrieved from the Internet: URL:https://arxiv.org/pdf/2312.12456v1 * abstract * * 1. Introduction * * 4. PowerInfer Overview * * 5. Neuron-aware Inference Engine * ----- | 1-15 | |
| T | CHONG YOU ET AL: "Spark Transformer: Reactivating Sparsity in FFN and Attention", ARXIV.ORG, CORNELL UNIVERSITY LIBRARY, 201 OLIN LIBRARY CORNELL UNIVERSITY ITHACA, NY 14853, 7 June 2025 (2025-06-07), XP092054172, * abstract * ----- | | |

TECHNICAL FIELDS SEARCHED (IPC)

G06N

The present search report has been drawn up for all claims

| Place of search | Date of completion of the search | Examiner |
|---|---|---|
| The Hague | 10 February 2026 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 202441074507 A